# DEMANDE DE BREVET EUROPEEN

(11) **EP 3 054 426 A1**
(43) Date de publication de la demande: **10.08.2016**
(21) Numéro de dépôt: 16154177.6
(22) Date de dépôt: 04.02.2016
(51) Int. Cl.: G06T 19/00

(54) **PROCÉDÉ DE GESTION DE L'AFFICHAGE, PRODUIT PROGRAMME D'ORDINATEUR ET DISPOSITIF ÉLECTRONIQUE ASSOCIÉS**

(30) Priorité: 05.02.2015 FR 1550907
(71) Demandeur: Schneider Electric Industries SAS, 92500 Rueil-Malmaison (FR)
(72) Inventeur: MORAND, Denis, 38050 GRENOBLE CEDEX 09 (FR); MEFTAH, Tewfik, 38050 GRENOBLE CEDEX 09 (FR)
(74) Mandataire: Myon, Gérard Jean-Pierre

(57) **Abrégé**

Ce procédé de gestion de l'affichage sur un écran d'un dispositif électronique (2) d'au moins une information relative à un équipement, comporte les étapes suivantes :
a) la fourniture d'une image enrichie de l'équipement, comportant une image de l'équipement et des points d'intérêt de l'équipement,
b) le choix d'au moins un point d'intérêt parmi la pluralité de points d'intérêt, pour obtenir un ensemble des points d'intérêt choisis,
c) la sélection d'informations à afficher,
d) la fourniture d'un ensemble de schémas de l'équipement disponibles pour l'équipement,
e) l'optimisation, selon un critère prédéfini, de chaque schéma de l'équipement disponible par insertion dans le schéma de l'équipement d'une visualisation des informations à afficher pour obtenir au moins une représentation schématique enrichie,
f) le classement des représentations schématiques enrichies selon le critère prédéfini, et
h) l'affichage d'au moins une des représentations schématiques enrichies (Rₑ) obtenues, à la place de l'image enrichie (Iₑ).

## Description

La présente invention concerne un procédé de gestion de l'affichage, sur un écran d'un dispositif électronique, d'au moins une information relative à un équipement. L'invention concerne également un produit programme d'ordinateur mettant en oeuvre un tel procédé et un dispositif électronique mettant en oeuvre un tel produit programme d'ordinateur.

Dans plusieurs domaines industriels, il est connu de superposer un modèle virtuel à une image d'un équipement industriel acquise par un dispositif électronique. Une telle superposition est affichable sur un écran du dispositif électronique sous la forme d'une nouvelle image sur laquelle des informations relatives à l'équipement industriel ont été superposées ou associées. Une telle image est ainsi appelée image enrichie. Un tel procédé d'affichage est généralement connu sous le nom de réalité augmentée.

A ce sujet, il est connu par exemple du document FR-A-2 990 286 des points d'intérêt indiquant des composants de l'équipement pour lesquels une information existe. Le document dévoile également la possibilité de positionner les points d'intérêt sur l'image acquise par rapport aux composants de l'équipement.

On connaît également les documents US-A-2011/0115816 ainsi que les articles de Sanghoon Lee et al : « Augmented reality-based computational fieldwork support for equipment operations and maintenance », Automation In Construction, vol. 20, no. 4, 4 novembre 2010, pages 338-352, DOI: 10.1016/J.AUTCON.2010.11.004 et de Hugo Alvarez et al : « Providing guidance for maintenance opérations using automatic markerless Augmented Reality system », 10TH IEEE International Symposium On Mixed And Augmented Reality, 26 octobre 2011, pages 181-190, DOI: 10.1109/ISMAR.2011.6092385.

Il est également connu de passer d'un mode d'affichage en réalité augmentée vers une énumération des composants et des informations identifiées sur l'image enrichie. Dans une telle approche, l'information est simplement recensée sous forme de liste. Toutefois, aucune représentation visuelle de l'équipement industriel envisagé n'est fournie, ce qui ne facilite pas la prise en compte et l'analyse des données affichées.

Il existe un besoin pour un procédé de gestion de l'affichage qui facilite l'accès à l'information pertinente pour un utilisateur.

A cet effet, l'invention a pour objet un procédé de gestion de l'affichage sur un écran d'un dispositif électronique d'au moins une information relative à un équipement, le procédé comportant les étapes suivantes:
a) la fourniture d'une image enrichie de l'équipement, comportant une image de l'équipement et des points d'intérêt de l'équipement, chaque point d'intérêt étant associé à une information propre d'un élément de l'équipement,
b) le choix d'au moins un point d'intérêt parmi la pluralité de points d'intérêt, pour obtenir un ensemble des points d'intérêt choisis,
c) la sélection d'informations à afficher, les informations à afficher étant les informations associées aux points d'intérêt choisis,
d) la fourniture d'un ensemble de schémas de l'équipement disponibles pour l'équipement,
e) l'optimisation, selon un critère prédéfini, de chaque schéma de l'équipement disponible par insertion dans le schéma de l'équipement d'une visualisation des informations à afficher, la visualisation étant compatibles avec le schéma, pour obtenir au moins une représentation schématique enrichie distincte de l'image enrichie et comportant un schéma de l'équipement et au moins une visualisation d'une des informations à afficher,
f) le classement des représentations schématiques enrichies selon le critère prédéfini, et
h) l'affichage d'au moins une des représentations schématiques enrichies obtenues, à la place de l'image enrichie.

Grâce à l'invention, le procédé de gestion de l'affichage fournit au moins une représentation schématique enrichie de l'information identifiée sur l'équipement. Une telle représentation est notamment plus schématique et donc offre une approche simplifiée pour une analyse de l'information identifiée.

Selon des aspects avantageux mais non obligatoires de l'invention, un tel procédé de gestion de l'affichage comprend une ou plusieurs des caractéristiques suivantes, prise(s) selon toutes les combinaisons techniquement admissibles :
- Le procédé comporte, en outre, une étape g) de sélection de données, les données n'étant pas des informations associées aux points d'intérêt choisis et les données étant accessibles pour le dispositif électronique, les informations à afficher comprenant également les données sélectionnées.
- Les données sélectionnées proviennent d'au moins un capteur du dispositif électronique.
- L'étape e) d'optimisation comprend un ordonnancement des informations à afficher sous forme de treillis.
- L'étape e) d'optimisation comprend l'emploi de filtres de sélection.
- L'étape e) d'optimisation comprend l'emploi d'un tableau associatif associant à chaque point d'intérêt l'unique visualisation de l'information à laquelle le point d'intérêt est associé.
- Le procédé comporte, en outre, une étape h), d'affichage des représentations schématiques enrichies ordonnées selon la valeur du critère prédéfini.
- Le procédé comporte, en outre, un affichage de la représentation schématique enrichie présentant la valeur du critère prédéfini la plus élevée.
- Au moins une étape est déclenchée par une action d'un utilisateur.
- L'action de l'utilisateur est une rotation du dispositif électronique autour d'un axe perpendiculaire à son écran et le dispositif électronique comporte au moins un bouton d'actionnement ou un bouton tactile et l'action de l'utilisateur est une pression du bouton d'actionnement ou du bouton tactile.

L'invention a également pour objet un produit programme d'ordinateur comportant des instructions logicielles qui, lorsque mises en oeuvre par une unité de traitement d'informations intégrée à un dispositif électronique, met en oeuvre un procédé tel que décrit ci-dessus.

L'invention a également pour objet un dispositif électronique comprenant un détecteur, un ensemble de capteurs, un écran, une unité d'affichage de données à l'écran et une unité de traitement d'informations sur laquelle est mise en oeuvre un produit programme d'ordinateur tel que décrit précédemment.

L'invention sera mieux comprise et d'autres avantages de celle-ci apparaîtront plus clairement à la lumière de la description qui va suivre, donnée uniquement à titre d'exemple non limitatif et faite en référence aux dessins annexés, sur lesquels :
- la figure 1 est une représentation schématique d'un exemple de dispositif électronique ;
- la figure 2 est une vue schématique d'un exemple d'équipement ;
- la figure 3 est une vue schématique du dispositif électronique de la figure 1 et d'un exemple de produit programme d'ordinateur ;
- la figure 4 est une vue schématique détaillée du produit programme d'ordinateur représenté à la figure 3 ; et
- la figure 5 est un organigramme d'un exemple de procédé de gestion de l'affichage ;
- la figure 6 est une vue schématique du résultat obtenu après une fourniture d'une image enrichie de l'équipement à la figure 2 ;
- la figure 7 est une vue schématique d'une action d'un utilisateur, et
- la figure 8 est une vue schématique du résultat obtenu après un affichage d'une représentation schématique enrichie.

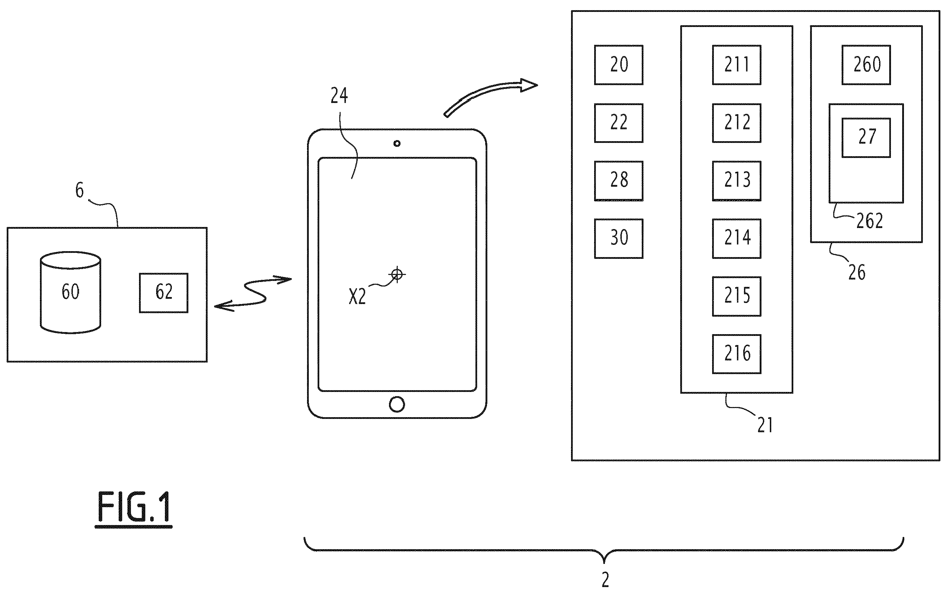

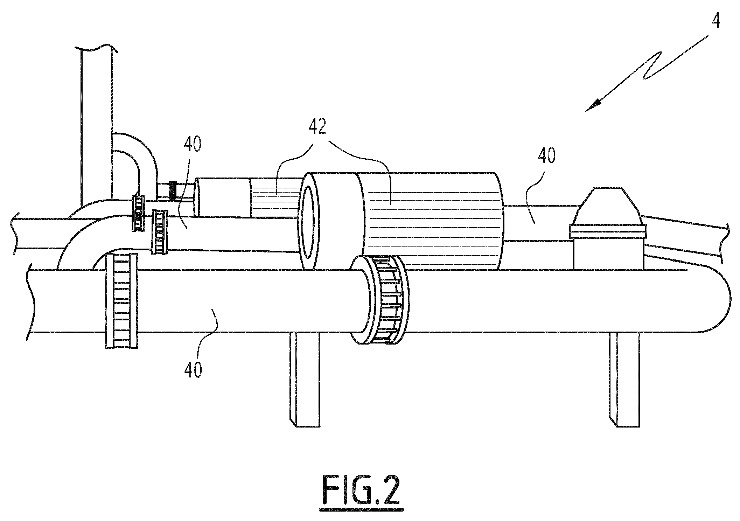

Sur les figures 1 et 2, sont représentés respectivement un dispositif électronique 2 et un équipement 4.

Le dispositif électronique 2 est destiné à un utilisateur.

Le dispositif électronique 2 est, de préférence, un dispositif électronique portatif, par exemple un téléphone portable, ou une tablette électronique.

En variante, le dispositif électronique 2 est un ordinateur.

Le dispositif électronique 2 est apte à mettre en oeuvre un produit programme d'ordinateur qui comporte des instructions logicielles pour exécuter un procédé de gestion de l'affichage.

Le dispositif électronique 2 comprend un détecteur 20, un ensemble de capteurs 21, une unité d'affichage 22, un écran 24, une unité de traitement 26, un émetteur-récepteur 28 et une unité d'alimentation 30.

Le détecteur 20 est, par exemple, un capteur d'images propre à acquérir une ou plusieurs images successives de l'équipement 4.

Par exemple, le détecteur 20 est un capteur matriciel, tel qu'un capteur CCD (de l'anglais *Charge-Coupled Device)* ou un capteur CMOS (de l'anglais *Complementary Metal Oxide Semi-conductor*).

Le détecteur 20 est propre à délivrer à l'unité de traitement 26 une image acquise Iₐ de l'équipement 4, ou bien à fournir une vidéo d'images successives dudit équipement 4.

L'ensemble de capteurs 21 comprend, par exemple, une unité de géolocalisation 211, un accéléromètre 212, un gyroscope 213, un capteur tactile 214, un capteur de mouvement oculaire 215 et un microphone 216.

En variante, l'ensemble de capteurs 21 comporte n'importe quelle combinaison des capteurs précédemment mentionnés.

Selon encore une autre variante, l'ensemble de capteurs 21 comporte d'autres capteurs permettant d'accéder à d'autres informations susceptibles d'intéresser l'utilisateur.

L'unité de géolocalisation 211, l'accéléromètre 212 et le gyroscope 213 sont propres à fournir des données de position du dispositif électronique 2. Les données de position relatives au dispositif électronique 2 sont notées données D2 dans la suite de la description

L'unité de géolocalisation 211 est, par exemple, configurée pour se mettre en communication avec un système de géolocalisation, par exemple un système de géolocalisation à l'intérieur (en anglais *indoor positioning*) ou un système de géolocalisation à l'extérieur (en anglais *outdoor positioning*), tel que le système GPS (de l'anglais *Global Positioning System*) qui est connu en soi.

L'accéléromètre 212 permet de mesurer l'accélération du dispositif électronique 2 selon au moins une direction. Selon une variante, l'accéléromètre 212 comporte une pluralité de capteurs permettant de mesurer l'accélération du dispositif électronique 2 selon trois directions distinctes.

Le gyroscope 213 permet de mesurer la rotation du dispositif électronique 2 selon au moins un axe. Selon une variante, le gyroscope 213 comporte une pluralité de capteurs permettant de mesurer la rotation du dispositif électronique 2 selon trois axes distincts.

Le capteur tactile 214, le capteur de mouvement oculaire 215 et le microphone 216 sont propres à transmettre à l'unité de traitement 26 au moins une information relative à une commande de l'utilisateur.

Le capteur tactile 214 est disposé au-dessous de l'écran 24, de manière à ce que l'écran 24 soit un écran tactile apte à afficher des boutons tactiles et/ou un clavier tactile.

Le capteur de mouvement oculaire 215 est, par exemple, un oculomètre et permet de suivre les mouvements de l'oeil de l'utilisateur.

Le microphone 216 permet d'enregistrer la voix de l'utilisateur.

L'unité d'affichage 22 est apte à afficher des données à l'écran 24. En particulier, l'unité d'affichage 22 est propre à afficher tout type d'image à l'écran 24 du dispositif électronique 2, notamment l'image Iₐ acquise par le détecteur 20 ou bien une image acquise et ensuite modifiée par l'unité de traitement 26. L'unité d'affichage 22 est, par exemple, un logiciel ou une carte graphique permettant l'affichage de l'image Iₐ à l'écran 24.

L'écran 24 est configuré pour afficher une ou plusieurs images successives, notamment en interaction avec le détecteur 20 et/ou l'unité d'affichage 22.

Pour la suite de la description, l'axe perpendiculaire à la surface de l'écran 24 est noté axe normal X2.

L'écran 24 présente des dimensions permettant une visualisation aisée de l'image acquise Iₐ, telle qu'une diagonale de longueur supérieure à cinq pouces, de préférence supérieure à sept pouces, de préférence encore supérieure à neuf pouces.

L'unité de traitement 26 est apte au traitement informatique d'informations. En particulier, l'unité de traitement 26 est propre à mettre en oeuvre des modifications, des conversions, ainsi que des analyses sur l'image acquise Iₐ.

L'unité de traitement 26 comporte un processeur 260 et une mémoire 262 associée au processeur 260.

Le processeur 260 est apte à mettre en oeuvre une ou plusieurs instructions logicielles mémorisées dans la mémoire 262.

La mémoire 262 de l'unité de traitement d'informations 26 du dispositif électronique 2 est apte à mémoriser des données, ainsi qu'un produit programme d'ordinateur 27.

Les données mémorisées par la mémoire 262 sont, par exemple, des données D4 concernant l'équipement 4 et enregistrées sous forme de fichiers, des valeurs numériques et/ou des valeurs textuelles. Les données mémorisées par la mémoire 262 peuvent être également les données D2 de position du dispositif électronique 2 fournies par l'ensemble de capteurs 21.

Le produit programme d'ordinateur 27 comporte des instructions logicielles qui, lorsqu'elles sont mises en oeuvre par l'unité de traitement 26, permettent de mettre en oeuvre un procédé d'affichage d'une information I4 relative à l'équipement 4.

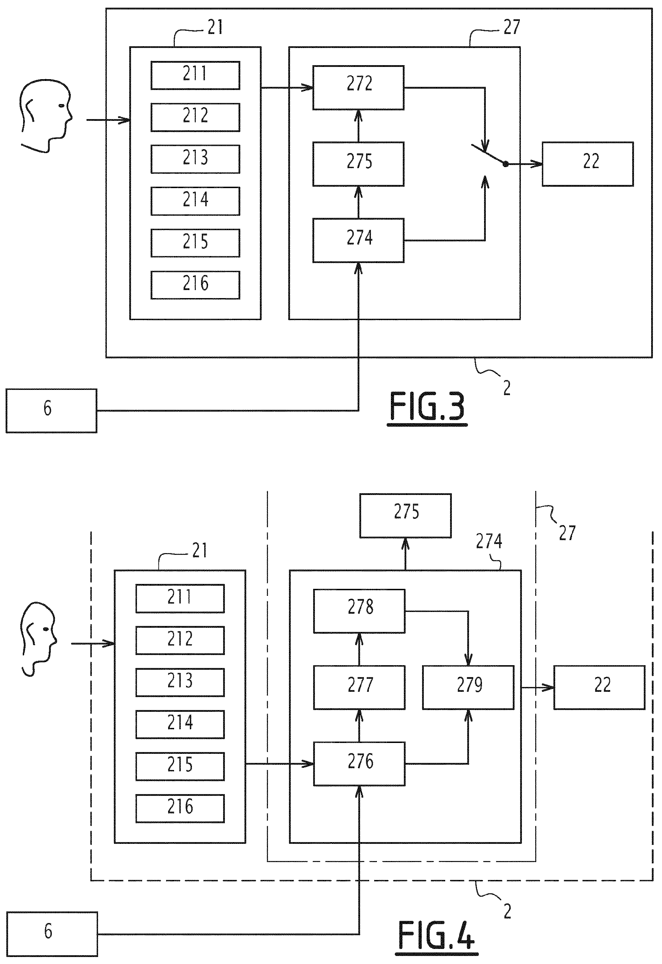

Comme visible dans la figure 3, le produit programme d'ordinateur 27 comporte une première instruction logicielle 272, une deuxième instruction logicielle 274 et une troisième instruction logicielle 275.

La première instruction logicielle 272 est, par exemple, une instruction logicielle d'affichage en réalité augmentée.

La première instruction logicielle de réalité augmentée 272 est apte à fournir une image enrichie Iₑ de l'équipement 4 par association à l'image acquise Iₐ d'une pluralité des points d'intérêt P. Chaque point d'intérêt P indique un élément de l'équipement 4 et est associé à une information I_{P} propre de l'élément en question. Un point d'intérêt P est, par exemple, une donnée numérique D_{P}, tel qu'une valeur textuelle, une valeur de mesure, une image, un widget graphique (un composant d'interface graphique, un élément visuel d'une interface graphique, soit un bouton, un ascenseur, une liste déroulante ou autre), un lien hypertexte ou tout autre donnée pertinente pour l'affichage en réalité augmentée.

La deuxième instruction logicielle 274 est, par exemple, une instruction logicielle d'affichage en mode conventionnel.

La deuxième instruction logicielle 274 est apte à fournir une représentation schématique enrichie Rₑ de l'image enrichie Iₑ de l'équipement 4.

La représentation schématique enrichie Rₑ est, par exemple, un plan, un graphique, un modèle, une interface homme-machine ou un synoptique, tel qu'un synoptique SCADA (de l'anglais *Supervisory Control And Data Acquisition*). La représentation schématique enrichie Rₑ comporte une pluralité d'objets O.

En variante, dans le cas où la représentation schématique enrichie Rₑ est une interface homme-machine ou un synoptique, elle peut également ne pas comporter des objets O.

Chaque objet O indique un élément de l'équipement 4 et est associé au respectif point d'intérêt P de l'image enrichie Iₑ. Par conséquence, chaque objet O est associé à une information I_{O} propre de l'élément en question.

Un objet O est, par exemple, une donnée numérique D_{O}, tel qu'une valeur textuelle, une valeur de mesure, une image, un lien hypertexte ou tout autre donnée pertinente pour l'affichage en mode conventionnel.

Comme visible dans la figure 4, la deuxième instruction logicielle 274 comporte une instruction logicielle de sélection 276, une instruction logicielle d'élaboration 277, une instruction logicielle de classement 278 et une instruction logicielle de visualisation 279.

L'instruction logicielle de sélection 276 est configurée pour récupérer les informations I_{P} associées aux points d'intérêt P à afficher.

L'instruction logicielle d'élaboration 277 est apte à fournir un ensemble de schémas de l'équipement 4.

Un schéma de l'équipement 4 est une vue bidimensionnelle ou tridimensionnelle qui décrit l'équipement 4. Chaque schéma comporte une visualisation des informations I4 à afficher.

L'instruction logicielle d'élaboration 277 est apte également à optimiser chaque schéma de l'équipement 4, selon un critère prédéfini C, afin d'obtenir la représentation schématique enrichie Rₑ.

Le critère prédéfini C est, par exemple, choisi par l'utilisateur. Le critère prédéfini C représente alors une commande, exprimée par l'utilisateur, concernant les représentations schématiques enrichies Rₑ. Le critère prédéfini C peut être alors « le schéma présentant les plus de points d'intérêt P » ou « le schéma présentant les points d'intérêt P avec les plus d'informations à afficher». Des autres critères C peuvent être envisagés par l'utilisateur.

L'instruction logicielle de classement 278 est configurée pour classer ou ordonner, selon le même critère C, les représentations schématiques enrichies Rₑ.

L'instruction logicielle de visualisation 279 est apte à afficher la représentation schématique enrichie Rₑ présentant la valeur du critère prédéfini C la plus élevée.

En variante, l'instruction logicielle de visualisation 279 est apte à afficher la représentation schématique enrichie Rₑ sélectionnée par l'utilisateur.

La troisième instruction logicielle 275 est une instruction logicielle d'exécution configurée pour associer à chaque objet O de la représentation schématique enrichie Rₑ un point d'intérêt P de l'image enrichie Iₑ. La troisième instruction logicielle 275 est pilotée par la deuxième instruction logicielle 274.

L'émetteur-récepteur 28 est, par exemple, une antenne. L'antenne 28 est configurée pour établir des communications bidirectionnelles radioélectriques entre le dispositif électronique 2 et au moins une unité externe au dispositif électronique 2. Une telle unité externe est apte à communiquer les informations I4 concernant l'équipement 4.

L'unité externe est, par exemple, un serveur 6 positionné ailleurs de l'équipement 4, également appelé serveur distant. Le serveur 6 est notamment représenté à la figure 1.

En variante, le serveur 6 est positionné au voisinage de l'équipement 4, par exemple de telle sorte qu'un réseau local relie le serveur 6 à l'équipement 4.

En variante encore, plusieurs unités externes sont aptes à communiquer les informations I4 concernant l'équipement 4. Les unités externes sont, par exemple, des serveurs de type distant et/ou local.

L'unité d'alimentation 30 est configurée pour alimenter en énergie électrique le détecteur 20, l'ensemble de capteurs 21, l'unité d'affichage 22, l'écran 24, l'unité de traitement d'informations 26 et l'émetteur-récepteur 28.

L'unité d'alimentation 30 est, par exemple, une batterie électrique. Une telle batterie est, de préférence, rechargeable.

L'équipement 4 est, par exemple, une station de pompage. La station de pompage 4 comprend des tuyaux 40, des pompes 42, des moteurs électriques, des capteurs (non représentés) et des armoires de protection (non représentés) comprenant des variateurs de vitesse, d'automates et des actionneurs.

Le serveur 6 comporte une base de données 60 et une unité d'émission 62 de données à destination du dispositif électronique 2.

La base de données 60 est propre à mémoriser des données D4 relatives à l'équipement 4, notamment des données relatives à l'état et au fonctionnement de chaque tuyau 40, de la pompe 42 et des autres composants non représentés dans les figures. Les données mémorisées D4 sont, par exemple, la puissance électrique consommée par chaque moteur électrique, la température de chaque tuyau 40, la pression de chaque pompe 42, ainsi que la présence ou non d'un défaut de fonctionnement pour chacun des composants.

En complément, les données mémorisées D4 sont affichées sous forme d'une représentation schématique enrichie Rₑ, tel qu'un synoptique SCADA, une interface homme-machine ou une page Internet.

L'unité d'émission 62 est configurée pour envoyer au dispositif électronique 2 les données D4 relatives à l'équipement 4, mémorisées dans la base de données 60.

Le fonctionnement du dispositif électrique 2 et du produit programme d'ordinateur 27 est expliqué dans la description qui va suivre d'un exemple de mise en oeuvre d'un procédé d'affichage.

Comme décrit dans la suite, chaque étape du procédé de gestion de l'affichage est déclenchée par une action de l'utilisateur. L'action de l'utilisateur est, par exemple, une rotation du dispositif électronique 2 autour de l'axe normal X2 ou une pression d'un bouton d'actionnement du dispositif électronique 2 ou encore une pression d'un bouton tactile de l'écran 24, à l'aide du capteur tactile 214.

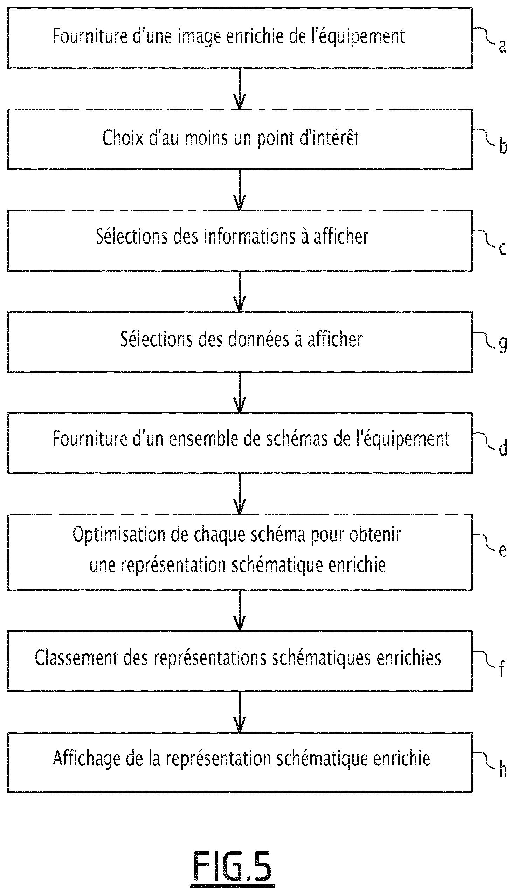

L'utilisateur se sert du dispositif électronique 2 pour extraire une pluralité d'informations concernant l'équipement 4. Le produit programme d'ordinateur 27 est alors lancé sur le dispositif électronique 2 par l'utilisateur. Le produit 27 met en oeuvre le procédé de gestion de l'affichage. Un tel procédé comporte plusieurs étapes, comme montré à la figure 5 et comme expliqué dans la description qui va suivre.

Le procédé d'affichage comporte une première étape a) de fourniture d'une image enrichie Iₑ de l'équipement 4 comportant une image acquise Iₐ de l'équipement 4 et des points d'intérêt P de l'équipement 4.

L'étape a) est mise en oeuvre par l'unité de traitement 26.

En variante, à l'étape a), une image enrichie Iₑ de l'équipement 4 est fournie à l'unité de traitement 26 puis l'unité de traitement 26 analyse les points d'intérêt P. Une telle analyse est effectuée en dynamique au moment du changement de mode ou en statique, notamment après un figeage de l'écran 24.

En particulier, lors de l'étape a), l'unité de traitement 26 lance la première instruction logicielle 272.

Selon un mode de réalisation, le dispositif électronique 2 procède à l'identification de l'équipement 4 par géolocalisation. Le dispositif électronique 2 calcule, à l'aide de l'unité de géolocalisation 211, les coordonnées de l'équipement 4 ainsi que l'orientation de l'équipement 4. A titre d'exemple, les coordonnées calculées sont des coordonnées GPS. Ensuite, le dispositif électronique 2, via son antenne 28, établit une communication radioélectrique avec la base de données 60 du serveur 6, par l'intermédiaire de l'unité d'émission 62.

Les coordonnées GPS ainsi que l'orientation du dispositif électronique 2 sont alors envoyées au serveur 6 qui identifie l'équipement 4.

En variante, l'identification de l'équipement 4 est réalisée par reconnaissance d'une image de l'équipement 4. En d'autres termes, le dispositif électronique 2 acquiert une image Iₐ, ou bien une succession d'images, de l'équipement 4, à l'aide du détecteur 20. La ou les images sont ensuite envoyées au serveur 6 qui identifie l'équipement 4.

En variante encore, l'identification de l'équipement 4 est réalisée à l'aide d'un code unique présente sur l'équipement 4. Le code unique est, par exemple, un code d'identification bidimensionnel, un code à barres, une image ou symbole d'identification, un code QR (de l'anglais *Quick Response*), également appelé code matriciel, ou tout autre moyen permettant l'identification univoque de l'équipement 4. En d'autres termes, le dispositif électronique 2 acquiert une image du code unique à l'aide du détecteur 20 qui est ensuite envoyée au serveur 6 pour l'identification de l'équipement 4.

Lorsque le serveur 6 a identifié l'équipement 4, le serveur 6 envoie au dispositif électronique 2 les informations I_{P} relatives aux points d'intérêt P qui sont présents sur l'équipement 4 identifié. La pluralité des points d'intérêt P est alors affichée par l'unité d'affichage 22 sur l'image acquise Iₐ qui devient l'image enrichie Iₑ. Comme expliqué ci-dessus, chaque point d'intérêt P est associé à une information I_{P} propre d'un élément de l'équipement 4, à laquelle l'utilisateur peut accéder.

En variante, à l'étape a), il est fourni une succession d'images enrichies, par exemple une vidéo, de l'équipement 4 comportant une succession d'images acquises de l'équipement 4 et des points d'intérêt P de l'équipement 4. L'identification de l'équipement 4 est alors mise en oeuvre ainsi qu'expliquée précédemment. En particulier, lorsque le serveur 6 a envoyé les informations I_{P} relatives aux points d'intérêt P, la pluralité des points d'intérêt P est affichée par l'unité d'affichage 22 sur la succession d'images acquises qui deviennent la succession d'images enrichies.

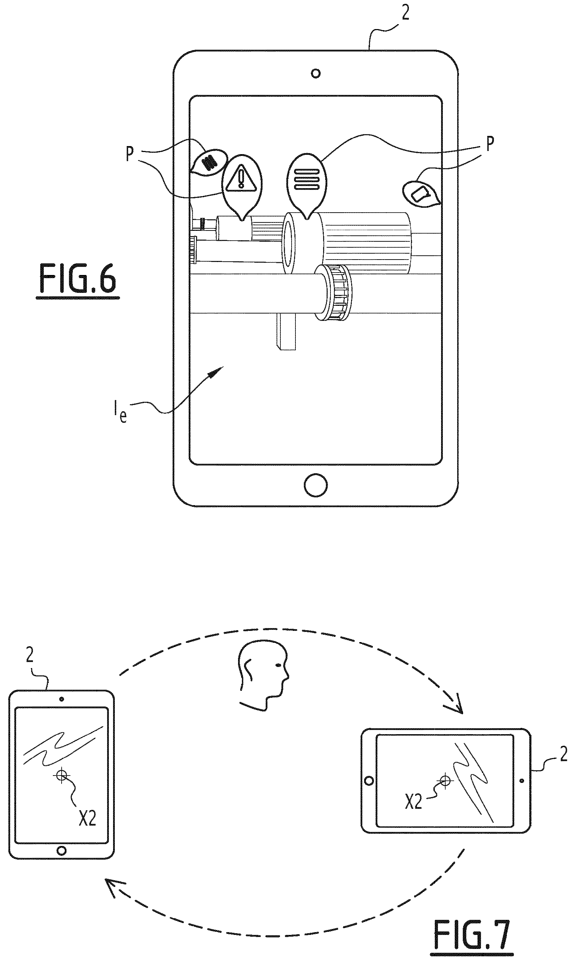

A l'issue de l'étape a), le produit programme d'ordinateur 27 a fourni une vue en réalité augmentée de l'équipement 4. Par exemple, comme représenté à la figure 6, l'image enrichie Iₑ est affichée à l'écran 24 du dispositif électronique 2, à l'aide de l'unité d'affichage 22. L'image enrichie Iₑ comporte l'image acquise Iₐ d'une partie de l'équipement 4 et les points d'intérêt P qui ont été identifiées sur telle partie de l'équipement 4. En particulier, sur l'image enrichie Iₑ sont visibles deux pompes 42, des tuyaux 40 et quatre points d'intérêt P. Dans le cas, les points d'intérêt P sont un message de défaut, deux messages comprenant des mesures réalisées par des capteurs de l'équipement 4 et un message textuel relative au fonctionnement d'un composant de l'équipement 4.

Or, l'utilisateur souhaite passer de la vue en réalité augmentée à une vue en mode conventionnel. Pour cela, l'utilisateur tourne, par exemple de 90°, le dispositif électronique 2, autour de l'axe normal X2, comme représenté à la figure 7. Une telle action de l'utilisateur lance la troisième instruction logicielle 274.

Le procédé comporte alors une étape b) de choix d'au moins un point d'intérêt P parmi la pluralité des points d'intérêt P, pour obtenir un ensemble des points d'intérêt P choisis.

L'étape b) de choix est mise en oeuvre par l'utilisateur en interaction avec le dispositif électronique 2.

En particulier, l'utilisateur sélectionne les points d'intérêt P que l'utilisateur souhaite conserver. Par exemple, en référence à la figure 6, l'utilisateur choisit les points d'intérêt P relatifs au message de défaut et aux messages avec mesures. Un tel choix de l'utilisateur peut être réalisé de manière manuelle, par exemple à l'aide du capteur tactile 214 sur l'écran 24 ou à l'aide du microphone 216 pour une reconnaissance vocale ou via tout autre moyen de sélection manuelle, ou de manière automatique, par exemple en sélectionnant une zone de l'écran 24 qui contient des points d'intérêt P ou tout autre moyen de sélection automatique.

A l'issue de l'étape b), l'utilisateur obtient l'ensemble de points d'intérêt P qui correspondent aux éléments de l'équipement 4 les plus pertinents ou intéressants.

Le procédé comporte ensuite une étape c) de sélection des informations à afficher, les informations à afficher étant les informations I_{P} associées aux points d'intérêt P choisis.

L'étape c) est mise en oeuvre par l'instruction logicielle de sélection 276. Plus précisément, l'instruction logicielle 276 récupère à partir du serveur 6, les informations I_{P} associées aux points d'intérêt P choisis. Par exemple, en référence à la figure 6, l'instruction logicielle de sélection 276 récupère à partir du serveur 6 des informations I_{P} concernant un défaut et des mesures réalisées sur l'élément considéré de l'équipement 4. A titre d'illustration, les informations Iₚ portent sur la pression de chacun des tuyaux 40.

Le procédé comporte ensuite une étape g) de sélection des données. Les données sélectionnées à l'étape g) sont destinées à être affichées.

L'étape g) est mise en oeuvre par l'instruction logicielle de sélection 276.

De manière générale, l'utilisateur complète à l'étape g) la sélection de l'étape c) par d'autres demandes d'informations que l'utilisateur juge pertinentes. De telles sources d'informations complémentaires sont issues ou générées par le dispositif électronique 2. A titre d'exemple, les données sont des coordonnées GPS, des données extraites de fichiers, des entrées de valeur numérique ou encore des données textuelles. De manière alternative ou complémentaire, les données sont recherchées par le dispositif électronique 2 par des moyens d'accès à distance et de récupération de données sur un ou plusieurs serveurs distant.

Ainsi, les données ne sont pas les informations I_{P} associées aux points d'intérêt P choisis mais sont des données accessibles pour le dispositif électronique 2. Un tel accès aux données est généralement permis par l'instruction logicielle de sélection 276.

Plus précisément, selon l'exemple illustré, l'instruction logicielle de sélection 276 récupère les données à partir du détecteur 20 et de l'ensemble des capteurs 21.

Par exemple, l'instruction logicielle de sélection 276 récupère les données de position D2 du dispositif électronique 2.

L'instruction logicielle de sélection 276 récupère également les données D4 relatives à l'équipement 4 à partir de la mémoire 262 de l'unité de traitement 26. Pour rappel, les données D4 sont des valeurs numériques et textuelles concernant l'équipement 4.

Par exemple, en référence à la figure 6, l'instruction logicielle de sélection 276 récupère une image à partir le détecteur 20 et une liste des actions correctives à réaliser pour corriger le défaut à partir de la mémoire 262.A l'issue de l'étape g), les informations à afficher comprennent les informations I_{P} récupérées lors de l'étape c) et les données récupérées lors de l'étape g).

Le procédé comporte ensuite une étape d) de fourniture d'un ensemble de schémas de l'équipement 4 disponibles pour l'équipement 4.

En variante, un schéma seulement est disponible pour l'équipement 4.

Par exemple, l'instruction logicielle d'élaboration 277 fournit une liste de schémas disponibles comprenant un schéma bidimensionnel, un schéma tridimensionnel ou autres.

L'étape d) est mise en oeuvre par l'instruction logicielle d'élaboration 277 de l'instruction logicielle d'affichage en mode conventionnel 274.

A l'issue de l'étape d), un ensemble de schémas est donc obtenu pour l'équipement 4. Ces schémas ne comportent pas les informations à afficher.

Le procédé comporte ensuite une étape e) d'optimisation de chaque schéma de l'équipement 4 disponible pour obtenir une représentation schématique enrichie Rₑ. L'étape e) d'optimisation est mise en oeuvre par l'instruction logicielle d'élaboration 277. L'optimisation est réalisée selon le critère prédéfini C.

L'optimisation comporte l'insertion dans le schéma de l'équipement 4 d'une visualisation des informations I4 à afficher. La visualisation est compatible avec le schéma.

A l'issue de l'étape e), il est obtenu un ensemble de représentations schématiques enrichies Rₑ, chaque représentation schématique enrichie Rₑ comportant un schéma de l'équipement 4 et des visualisations des informations I4 à afficher. Sur chaque représentation schématique enrichie Rₑ sont superposés les objets O associés aux points d'intérêt P choisis par l'utilisateur sur l'image enrichie Iₑ.

Le procédé comporte ensuite une étape f) de classement des représentations schématiques enrichies Rₑ selon le critère prédéfini C.

En pratique, le classement ordonne les représentations schématiques enrichies Rₑ selon la commande et/ou les informations demandées par l'utilisateur.

A l'issue de ce classement, le procédé est capable de déterminer la meilleure représentation schématique enrichie Rₑ.

L'étape f) est mise en oeuvre par l'instruction logicielle de classement 278.

Plusieurs modes de réalisation sont proposés pour mettre en oeuvre les étapes e) et f), notamment de manière simultanée.

Selon un premier mode de réalisation, pour l'insertion dans le schéma de la visualisation des informations I4 à afficher, l'étape e) d'optimisation comprend, par exemple, l'emploi d'un tableau associatif. Un tel tableau comprend tous les points d'intérêt P de l'équipement 4 et associe à chaque point d'intérêt P une valeur textuelle, telle qu'une chaine de caractères URI (de l'anglais *Uniform Resource Identifier*). L'URI indique une ressource, telle que la visualisation des informations à afficher. Une telle visualisation des informations est, par exemple, un synoptique SCADA ou une interface homme-machine ou encore une page internet. En d'autres termes, le tableau associe à chaque point d'intérêt P l'unique visualisation de l'information I_{P}.

Lors de l'optimisation, l'utilisateur choisit le point d'intérêt P le plus pertinent pour un certain schéma. L'instruction logicielle d'élaboration 277 extrait, via le tableau associatif, la visualisation et procède à l'insertion de telle visualisation dans le schéma en question.

Selon un deuxième mode de réalisation, l'étape e) d'optimisation comprend l'emploi d'au moins un filtre de sélection.

Chaque filtre de sélection est, par exemple, un filtre d'un protocole LDAP (de l'anglais *Ligthweight Directory Access Protocol*).

Les filtres LDAP permettent d'obtenir des données structurées selon une arborescence hiérarchique.

Un filtre LDAP est, par exemple, un filtre d'approximation. Une interrogation du type « nom dont l'orthographe est voisine de Pierre » est une illustration d'un filtre d'approximation.

Selon un autre exemple, un filtre LDAP est un filtre d'égalité, c'est-à-dire une interrogation du type « vaut exactement Pierre ».

Selon encore un autre exemple, un filtre LDAP est un filtre de comparaison ou une opération logique du type ET, OU, OU exclusif ou autres.

Chaque filtre LDAP est usuellement exprimé par une syntaxe propre au filtre.

Lors de l'optimisation, l'écran 24 affiche, à l'aide du capteur tactile 214, un clavier tactile. L'utilisateur entre une syntaxe qui corresponde à un filtre LDAP.

En variante, l'écran 24 affiche des boutons tactiles correspondants aux filtres LDAP. L'utilisateur sélectionne le filtre souhaité.

L'instruction logicielle d'élaboration 277 extrait les seuls points d'intérêt P qui sont associés à tel filtre. Ensuite, un tableau associatif associe à chaque point d'intérêt P identifié par le filtre LDAP une valeur textuelle, telle qu'une chaine de caractères URI. Un URI, de l'anglais Uniform Resource Identifier, soit littéralement identifiant uniforme de ressource, est une courte chaîne de caractères identifiant une ressource sur un réseau (par exemple une ressource Web) physique ou abstraite, et dont la syntaxe respecte une norme d'Internet mise en place pour le World Wide Web.

Comme expliqué ci-dessus, l'URI indique une visualisation. L'utilisateur peut ainsi choisir le point d'intérêt P le plus pertinent pour un certain schéma. L'instruction logicielle d'élaboration 277 extrait, via le tableau associatif, la visualisation et procède à l'insertion de telle visualisation dans le schéma en question.

L'emploi de filtres LDAP permet de sélectionner plusieurs points d'intérêt P.

En variante encore, l'étape e) d'optimisation comprend un ordonnancement des informations affichées sous forme de treillis. Un tel ordonnancement est réalisé, par exemple, à l'aide d'une analyse formelle de concepts ou encore d'une analyse de concepts formels, plus couramment désigné sous l'acronyme FCA (de l'anglais *Formal Concept Analysis*).

Une analyse FCA s'attache à étudier les concepts lorsque les concepts sont décrits formellement, c'est-à-dire que le contexte et les concepts sont complètement et précisément définis. Une telle analyse a été introduite par Rudolf Wille en 1982 en tant qu'instruction logicielle de la théorie des treillis. Il est rappelé qu'un concept peut-être défini par son intension et son extension : l'extension est l'ensemble des objets qui appartiennent au concept tandis que l'intension est l'ensemble des attributs partagés par ces objets.

Aussi, l'analyse FCA est un ensemble de techniques d'analyse de données dont l'objectif est d'identifier des regroupements d'objets ou d'attribut, également appelés concepts formels.

L'analyse FCA repose sur les treillis (appelé lattice en terminologie anglaise) qui sont, en mathématiques, un ensemble partiellement ordonné dans lequel chaque couple d'éléments admet une borne supérieure et une borne inférieure.

Chaque technique de l'analyse FCA repose sur l'emploi de tableau associant à chaque objet et les attributs des concepts formels considérés. Après mise en oeuvre de l'analyse, il est obtenu en sortie un treillis dont les éléments sont ordonnés.

Dans le cas particulier de l'étape e), l'objet d'un concept formel est un objet présent dans la vue en réalité augmentée, alors que l'attribut d'un concept formel est une chaîne de caractères URI indiquant une visualisation.

De manière alternative, l'attribut est une propriété de l'objet présent dans la vue en réalité augmentée ou une propriété de l'objet graphique.

Comme expliqué précédemment, dans l'exemple illustré, l'objet est un point d'intérêt P, de sorte que l'ensemble des points d'intérêt P choisis est une entrée prise en compte dans l'analyse FCA.

La mise en oeuvre de l'analyse FCA crée le tableau qui comporte les points d'intérêt P et les visualisations correspondantes. Comme un point d'intérêt P peut être associé à plusieurs visualisations, l'analyse FCA définit le treillis et ordonne dans le treillis les concepts formels. En pratique, via le treillis, l'analyse fournit la visualisation qui est la plus appropriée.

Ainsi, l'emploi de l'analyse FCA permet de présenter à l'utilisateur les visualisations ordonnées. Notamment, l'analyse FCA permet d'exprimer des filtres du type 'au minimum X et au plus Y' et de présenter des vues dont les relations ne sont pas « codés » et donc connu à l'avance.

L'instruction logicielle d'élaboration 277 extrait alors cette visualisation et procède à l'insertion de telle visualisation dans le schéma en question.

Le procédé comprend ensuite une étape h) d'affichage des représentations schématiques enrichies Rₑ ordonnées selon la valeur du critère prédéfini C, à la place de l'image enrichie Iₑ. L'étape h) est mise en oeuvre par l'instruction logicielle de visualisation 279 et l'unité d'affichage 22. L'utilisateur peut alors sélectionner la représentation schématique enrichie Rₑ qu'il juge la plus appropriée à ses requêtes. La représentation schématique enrichie Rₑ sélectionnée est ensuite affichée sur l'écran 24 à l'aide de l'unité d'affichage 22, à la place de l'image enrichie Iₑ en se substituant totalement à l'image enrichie Iₑ.

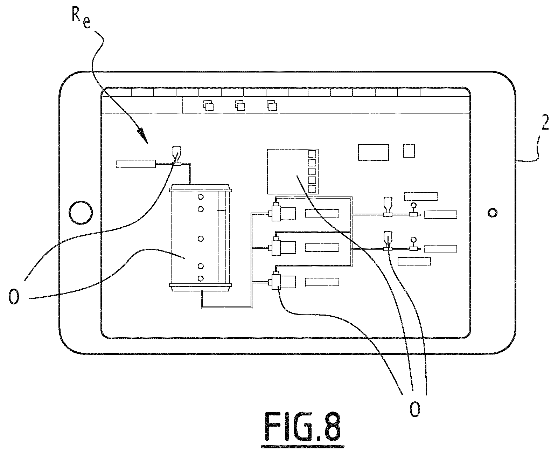

Par exemple, comme représenté à la figure 8, l'utilisateur sélectionne la représentation schématique enrichie Rₑ présentant la valeur du critère prédéfini C la plus élevée. Cette représentation schématique enrichie Rₑ comporte un schéma bidimensionnel et une visualisation des composants de l'équipement 4. En particulier, sur la représentation schématique enrichie Rₑ sont visibles les pompes 42 et les tuyaux 40, ainsi que les objets O associés aux points d'intérêt P de l'image enrichie Iₑ.

Dans le cas où la représentation schématique enrichie Rₑ est une page internet, l'instruction logicielle de visualisation 279 permet de consulter un navigateur web. Dans le cas où la représentation schématique enrichie Rₑ choisie est une interface homme-machine ou un synoptique, l'instruction logicielle de visualisation 279 permet d'exécuter une instruction logicielle spécifique apte à afficher l'interface ou la synoptique en question.

En complément, le procédé de gestion de l'affichage comporte des étapes pour passer de l'affichage en mode conventionnel à l'affichage en réalité augmentée. Ces étapes ultérieures ne sont pas représentées aux figures et vont être expliquées dans la description qui va suivre.

En pratique, à la suite d'une action de l'utilisateur, par exemple une rotation de 90° du dispositif électronique 2 autour de l'axe normal X2 où la pression d'un bouton d'actionnement ou d'un bouton tactile, l'utilisateur peut déclencher une conversion de la représentation schématique enrichie Rₑ en une image enrichie Iₑ ou en une succession d'images enrichies de l'affichage en réalité augmentée.

Alors, l'unité d'affichage 22 affiche à l'écran 24 un bouton tactile permettant à l'utilisateur de sélectionner une partie de la représentation schématique enrichie Rₑ. En particulier, l'utilisateur doit sélectionner une partie comportant au moins un objet O. Dans l'exemple, l'utilisateur sélectionne la partie de la représentation schématique enrichie Rₑ souhaitée et qui comporte plusieurs objets O.

En variante, l'utilisateur sélectionne la totalité de la représentation schématique enrichie Rₑ.

Ensuite, le procédé identifie, à l'aide de l'instruction logicielle d'exécution 275, les points d'intérêt P associés aux objets O sélectionnés.

Le procédé comporte ensuite une conversion de la partie sélectionnée ou de la totalité de la représentation schématique enrichie Rₑ en une nouvelle image enrichie Iₑ ou en une nouvelle succession d'images enrichies.

Comme décrit précédemment, le dispositif électronique 2 identifie, via le serveur 6, l'équipement 4 par géolocalisation, par reconnaissance d'image, à l'aide d'un code unique ou tout autre mécanisme permettant d'identifier de manière unique l'équipement 4. Le dispositif électronique 2 calcule, à l'aide de l'ensemble de capteurs 21, ses coordonnées GPS, son orientation, ainsi que la position relative du détecteur 20. En d'autres termes, à l'issue de cette étape, le procédé de gestion d'affichage a permis de reconnaître l'environnement où se trouve le dispositif électronique 2.

Ensuite, le produit programme d'ordinateur 27 localise et affiche sur une image de l'équipement 4, ou une succession d'images, les points d'intérêt P identifiés.

Plus précisément, le procédé localise les points d'intérêt P, affiche les points d'intérêt P si les points d'intérêt P sont localisées dans la partie de représentation schématique enrichie Rₑ sélectionnée ou indique leur position relative et guide l'utilisateur pour les retrouver lorsque les points d'intérêt P n'appartiennent pas à la partie de représentation schématique enrichie Rₑ sélectionnée.

En variante, lorsque la nouvelle image enrichie Iₑ ou la nouvelle succession d'images ne correspond pas à la partie sélectionnée ou à la totalité de la représentation schématique enrichie Rₑ et lorsque les points d'intérêt P ne sont pas directement visibles sur l'image Iₑ, le produit programme d'ordinateur 27 affiche sur l'écran 24 des marqueurs qui indiquent la position relative des points d'intérêt P.

Le procédé de gestion d'affichage est propre à réaliser un passage fluide et sans perturbations entre l'affichage en réalité augmentée et l'affichage en mode conventionnel. Le procédé permet de chercher la bonne interface visuelle dans le mode sélectionné par l'utilisateur. Le procédé présente alors l'interface ou une liste d'interfaces avec un taux de correspondance ordonné. Lorsqu'il existe plusieurs interfaces satisfaisantes, l'utilisateur choisit l'interface la plus appropriée.

L'utilisateur peut ainsi retrouver les mêmes informations dans les deux affichages. Le premier affichage de réalité augmentée correspond à un espace géographique et réel tandis que le deuxième affichage en mode conventionnel correspond à une vue métier, c'est-à-dire un espace logique et abstrait plus facilement intelligible pour l'utilisateur.

Ainsi, le procédé de gestion d'affichage est un outil pour l'utilisateur lui permettant d'obtenir un affichage en mode conventionnel, pour réaliser une analyse plus simplifiée, schématique et efficace de l'information identifiée. Le procédé de gestion d'affichage tel que décrit ci-dessus peut être utilisé dans un environnement industriel, comme la station de pompage 4, ainsi que dans d'environnements non industriels, par exemple un environnement dans lequel une activité du domaine tertiaire est pratiquée ou le milieu hospitalier.

## Revendications

1. Procédé de gestion de l'affichage sur un écran (24) d'un dispositif électronique (2) d'au moins une information (14) relative à un équipement (4), le procédé comportant les étapes suivantes :
a) la fourniture d'une image enrichie (Iₑ) de l'équipement (4), comportant une image (Iₐ) de l'équipement (4) et des points d'intérêt (P) de l'équipement (4), chaque point d'intérêt (P) étant associé à une information (I_{P}) propre d'un élément de l'équipement (4),
b) le choix d'au moins un point d'intérêt (P) parmi la pluralité de points d'intérêt (P), pour obtenir un ensemble des points d'intérêt (P) choisis,
c) la sélection d'informations à afficher, les informations à afficher étant les informations (I_{P}) associées aux points d'intérêt (P) choisis,
d) la fourniture d'un ensemble de schémas de l'équipement (4) disponibles pour l'équipement (4),
e) l'optimisation, selon un critère prédéfini (C), de chaque schéma de l'équipement (4) disponible par insertion dans le schéma de l'équipement (4) d'une visualisation des informations à afficher, la visualisation étant compatibles avec le schéma, pour obtenir au moins une représentation schématique enrichie (Rₑ) distincte de l'image enrichie (Iₑ) et comportant un schéma de l'équipement (4) et au moins une visualisation d'une des informations à afficher,
f) le classement des représentations schématiques enrichies (Rₑ) selon le critère prédéfini (C), et
h) l'affichage d'au moins une des représentations schématiques enrichies (Rₑ) obtenues, à la place de l'image enrichie (Iₑ).

2. Procédé selon la revendication 1, dans lequel le procédé comporte, en outre, une étape g) de sélection de données (D2, D4), les données (D2, D4) n'étant pas des informations (I_{P}) associées aux points d'intérêt (P) choisis et les données (D2, D4) étant accessibles pour le dispositif électronique (2), les informations à afficher comprenant également les données (D2, D4) sélectionnées.

3. Procédé selon la revendication 2, dans lequel les données (D2, D4) sélectionnées proviennent d'au moins un capteur (20, 21) du dispositif électronique (2).

4. Procédé selon l'une quelconque des revendications 1 à 3, dans lequel l'étape e) d'optimisation comprend un ordonnancement des informations à afficher sous forme de treillis.

5. Procédé selon l'une quelconque des revendications 1 à 3, dans lequel l'étape e) d'optimisation comprend l'emploi de filtres de sélection.

6. Procédé selon l'une quelconque des revendications 1 à 3, dans lequel l'étape e) d'optimisation comprend l'emploi d'un tableau associatif associant à chaque point d'intérêt (P) l'unique visualisation de l'information (I_{P}) à laquelle le point d'intérêt (P) est associé.

7. Procédé selon l'une quelconque des revendications 1 à 6, dans lequel le procédé comporte, en outre, une étape h), d'affichage des représentations schématiques enrichies (Rₑ) ordonnées selon la valeur du critère prédéfini (C).

8. Procédé selon la revendication 7, dans lequel, le procédé comporte, en outre, un affichage de la représentation schématique enrichie (Rₑ) présentant la valeur du critère prédéfini (C) la plus élevée.

9. Procédé selon l'une quelconque des revendications 1 à 8, dans lequel au moins une étape est déclenchée par une action d'un utilisateur.

10. Procédé selon la revendication 9, dans lequel l'action de l'utilisateur est une rotation du dispositif électronique (2) autour d'un axe (X2) perpendiculaire à son écran (24) et dans lequel le dispositif électronique (2) comporte au moins un bouton d'actionnement ou un bouton tactile et l'action de l'utilisateur est une pression du bouton d'actionnement ou du bouton tactile.

11. Produit programme d'ordinateur (27) comportant des instructions logicielles (272, 274, 275, 276, 277, 278, 279) qui, lorsque mises en oeuvre par une unité de traitement (26) d'informations intégrée à un dispositif électronique (2), met en oeuvre un procédé selon l'une quelconque des revendications 1 à 10.

12. Dispositif électronique (2) comprenant un détecteur (20), un ensemble de capteurs (21), un écran (24), une unité d'affichage (22) de données à l'écran et une unité de traitement (26) d'informations sur laquelle est mise en oeuvre un produit programme d'ordinateur (27) selon la revendication 11.
